(19)

Europäisches Patentamt

European Patent Office

Office européen des brevets

(11) **EP 4 459 506 A1**

(12) **EUROPEAN PATENT APPLICATION**

(43) Date of publication:
**06.11.2024 Bulletin 2024/45**

(51) International Patent Classification (IPC):
**G06N 3/045** (2023.01)      **G06N 3/0985** (2023.01)

(21) Application number: **24171687.7**

(52) Cooperative Patent Classification (CPC):
**G06N 3/045; G06N 3/0985**

(22) Date of filing: **22.04.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.04.2023 US 202363461637 P**

(71) Applicant: **Google LLC**
**Mountain View, CA 94043 (US)**

(72) Inventors:
• **ZHANG, Li**
**Kirkland (US)**

• **LI, Yandong**
**Redmond (US)**
• **CUI, Yin**
**Mountain View (US)**
• **CHEN, Hong-You**
**Mountain View (US)**
• **ZHANG, Mingda**
**Milburn (US)**

(74) Representative: **Derry, Paul Stefan et al**
**Venner Shipley LLP**
**200 Aldersgate**
**London EC1A 4HD (GB)**

(54) **TRAIN-ONCE-FOR-ALL PERSONALIZATION**

(57)    The technology relates to providing personalized neural network-based models according to user input, which can be generated upon request or otherwise as needed. This may include receiving, by one or more processors of a computing device, input corresponding to a task description. Then the input corresponding to the task description is encoded into a set of text embeddings. Based on this, the system applies mixer prediction to the set of text embeddings to generate a set of mixers and learns a set of basis models according to the set of mixers. The set of basis models are combined to form a single personalized model corresponding to the task description. This personalized model can then be used in video understanding, quality assessment, providing a recommendation, performing a classification, or performing a search.

EP 4 459 506 A1

**Description**

BACKGROUND

Machine learning techniques can be used to address many different types of applications, such as image recognition and natural language processing. Advances in deep learning and the accessibility of large datasets have enabled significant improvements in training a versatile "generic" machine learning model capable of classifying thousands of objects. However, updating an existing model, e.g., based on newer or changed datasets, or to cover additional tasks, can be costly from both processing resource and time perspectives. Moreover, the sheer size of a generic model may render it unsuitable for use on a client device such as a laptop or tablet computer, or a home appliance, which may have limited processing resources.

Specialized models focused on very specific user requirements may be suitable in certain situations. This could include accurately classifying a few frequently encountered or safety-critical objects in a particular environment. Such bespoke models can be particularly beneficial to a particular user. Unfortunately, this approach is not scalable from a service provider's point of view, as the computation for training can grow linearly with the number of users and their requests. The training latency can also degrade the user experience.

BRIEF SUMMARY

The technology relates to how to train a personalization-friendly machine learning model such that given only the task descriptions, the model can be adapted to different end-users' needs, e.g., for accurately classifying different subsets of objects. According to aspects of the technology, a framework is trained just once and can later customize a model for different end-users given their task descriptions. The framework learns a set of "basis" models and a mixer predictor, such that given the task description, the weights (but not the predictions) of the basis models can be on the fly in real time combined into a single "personalized" model.

As discussed further below, experimentation on multiple recognition tasks has shown that this approach consistently outperformed baseline methods in achieving a higher personalized accuracy. Moreover, it is shown that the system can synthesize a much smaller model to achieve comparable performance to a huge generic model, making it deployment-friendly" to resource-limited end devices, e.g., laptops or tables, home appliances, wearable computing devices, etc. Even without end-users' task descriptions, this approach can still be specialized to the deployed context based on its past predictions, making it even more personalization-friendly.

According to one aspect, a computer-implemented method comprises: receiving, by one or more processors of a computing device, input corresponding to a task description; encoding, by the one or more processors, the input corresponding to the task description into a set of text embeddings; applying, by the one or more processors, mixer prediction to the set of text embeddings to generate a set of mixers; learning, by the one or more processors, a set of basis models according to the set of mixers; and combining, by the one or more processors, the set of basis models to form a single personalized model corresponding to the task description.

Each basis model in the set of basis models may share a neural network architecture with the other basis models in the set of basis models. Alternatively or additionally, applying the mixer prediction may include applying a multilayer perceptron to the set of text embeddings. The set of mixers may correspond to a single mixers vector associated with each layer of the multilayer perceptron. Or each mixer of the set of mixers may correspond to a given mixers vector associated with a given layer of the multilayer perceptron. Alternatively or additionally to any of the above, encoding the input corresponding to the task description into the set of text embeddings may include extracting textual class names and encoding each textual class name into a given one of the set of text embeddings.

In one scenario, the single personalized model has a task lost $\mathcal{L}t$ expressed according to:

$$\min_{\phi, V = \{v_q\}_{q=1}^{Q}} \frac{1}{T} \sum_{t=1}^{T} \mathcal{L}_t(\theta_t),$$

where $\theta_t = \sum_q \boldsymbol{\alpha}_t[q] \times v_q, \ \ \boldsymbol{\alpha}_t = \sigma\big(g(d_t; \phi)\big),$

in which $\theta_t$ is personalized parameters for task $t$, each $v_q$ is a basis vector, V is a model generator, $\alpha_t$ is a vector for a mixer predictor network having $d_t$ as a task description and parameterized by $\phi$. For example $\alpha_t$ may be implemented according to a softmax function $\sigma(\cdot)$. Alternatively or additionally, the personalized model may not scale with Q.

Both the set of basis models and the mixer prediction may be learned. Alternatively or additionally to any of the above, the personalized model may be trained starting with a single network θ(0) to learn a general representation of a training dataset. Here, the personalized model may be further trained by splitting the training dataset into a plurality of shards based on either classes or domains. In one example, for each shard, θ(0) is copied as an initialization and fine-tuned to collect an expert model. The personalized model may be further trained by jointly learning both the set of basis models and the mixer prediction according to the task description.

Alternatively or additionally to any of the above, the method may further comprise applying the single personalized model to a received input to generate a predictor output corresponding to a classified object.

According to another aspect, a computing system is provided that comprises a user interface configured to receive input corresponding to a task description, and one or more processors. The one or more processors are configured to: encode the input corresponding to the task description into a set of text embeddings; apply mixer prediction to the set of text embeddings to generate a set of mixers; cause a set of basis models to learn according to the set of mixers; and combine the set of basis models to form a single personalized model corresponding to the task description.

Each basis model in the set of basis models may share a neural network architecture with the other basis models in the set of basis models. Application of the mixer prediction may include application of a multilayer perceptron to the set of text embeddings. The one or more processors may be further configured to apply the single personalized model to a received input to generate a predictor output corresponding to a classified object. Moreover, in accordance with any of the above approaches, the predictor output may be used to implement at least one of video understanding, quality assessment, provide a recommendation, perform a classification, or perform a search associated with the classified object.

BRIEF DESCRIPTION OF THE DRAWINGS

The patent or application file contains at least one drawing executed in color. Copies of this patent or patent application publication with color drawing(s) will be provided by the Office upon request and payment of the necessary fee.

Fig. 1 illustrates an example approach in accordance with aspects of the technology.
Fig. 2 illustrates a general transformer architecture for use with aspects of the technology.
Fig. 3 illustrates a train-once for personalization approach in accordance with aspects of the technology.
Fig. 4 presents a table of results from testing in accordance with aspects of the technology.
Fig. 5 presents another table of results from testing in accordance with aspects of the technology.
Fig. 6 presents a further table of results from testing in accordance with aspects of the technology.
Fig. 7 presents another table of results from testing in accordance with aspects of the technology.
Fig. 8 presents yet another table of results from testing in accordance with aspects of the technology.
Fig. 9 presents a table of results from testing in accordance with aspects of the technology.
Fig. 10 presents a further table of results from testing in accordance with aspects of the technology.
Fig. 11 presents a chart 1100 comparing personalized versus non-personalized results in accordance with aspects of the technology.
Figs. 12(a)-(b) are visualizations of t-SNE and bases of cosine similarity in accordance with aspects of the technology.
Figs. 13(a)-(b) illustrate a system for use with aspects of the technology.
Fig. 14 illustrates an example method in accordance with aspects of the technology.

DETAILED DESCRIPTION

While the use of large-scale machine learning models may be suitable to many tasks, such models may not be particularly helpful to individual needs. For instance, an image classifier trained on thousands of images may be able to achieve around an 80% accuracy in recognizing a set of objects. While this level of accuracy may be high for a general image recognition problem, it may be woefully inadequate for a visually-impaired user who seeks to smoothly interact with a handful of everyday objects. Thus, in many situations a better solution for end-users would be to construct personalized models dedicated to their needs. By way of example, this can involve training a 20-way classifier for everyday objects to attain an accuracy closer to 100% (e.g., 95%-98% or higher. Importantly, a personalized model may require a smaller capacity/size than a generic one, making it easier to deploy to resource-limited devices. Personalization acknowledges users' characteristics and learns each a dedicated model. It has practical value in many applications such as pose estimation, ads predictions, speech recognition, medical machine learning, etc.

One personalization approach is to train a new model upon request using selected data. Unfortunately, this is not scalable or efficient from the perspective of the model provider, as it could require substantial computing resources and time to train new models. Another approach is to train a (large) generic model, followed by class selection for personalization, which involves removing the classes that are not of the user's interest from the classification head.

While extremely straightforward without further training, this approach could boost the model to upwards of 95% accuracy on recognizing a limited number of classes. Nevertheless, this approach does not condense the model for computation and memory efficiency. Training on smaller models to address these issues can degrade the classification accuracy. However, it has been found that personalization of the backbone weights enables a model to better utilize its capacity to tackle the shrunken scope of end-users' tasks.

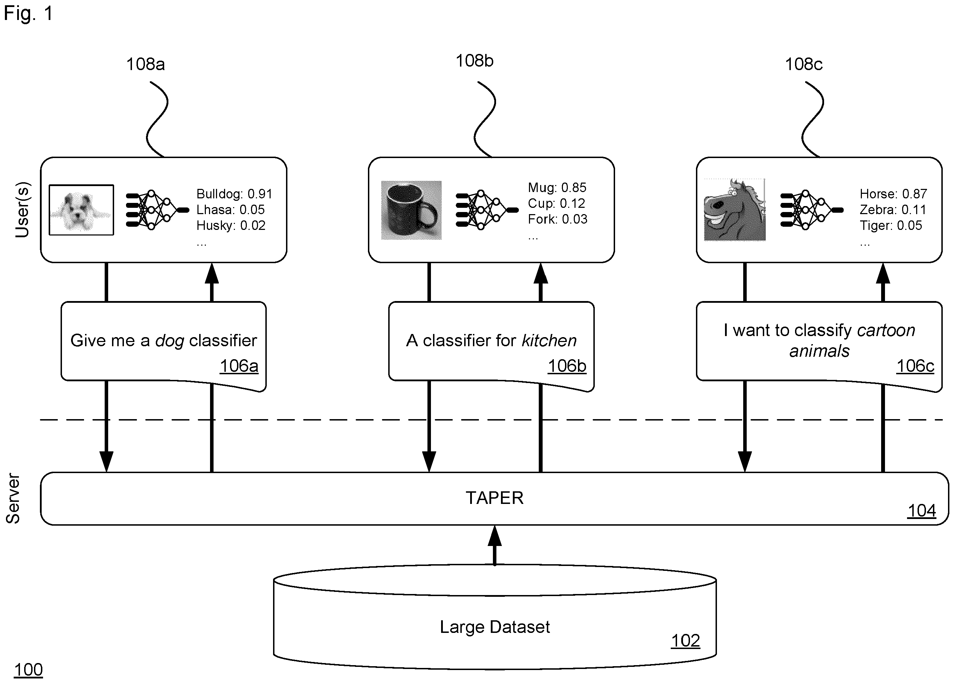

In view of this, the technology employs a "train-once-for-all personalization" (also referred to as "TAPER" herein) approach, which is a framework that is trained just once and can later customize a condensed model on the fly for different end-users and requests, according to their task descriptions. Fig. 1 illustrates an example high-level view 100 of this framework. Here, a large dataset 102 is utilized by the TAPER framework 104, e.g., on a backend server side. In response to user requests 106 (e.g., "Give me a *dog* classifier" (106a), "A classifier for *kitchen"* (106b) or "I want to classify *cartoon animals"* (106c), the framework can on the fly reply to each request with a corresponding personalized model 108, which is conditioned on the task description only (e.g., models 108a, 108b and 108c as shown).

The framework can be applied with different types of machine learning architectures, including Transformer-type architectures, Convolutional Neural Network (CNN) -type architectures, etc.

The following begins with a discussion of a general Transformer architecture, followed by a detailed discussion of the TAPER framework and implementation.

### *General Transformer Approach*

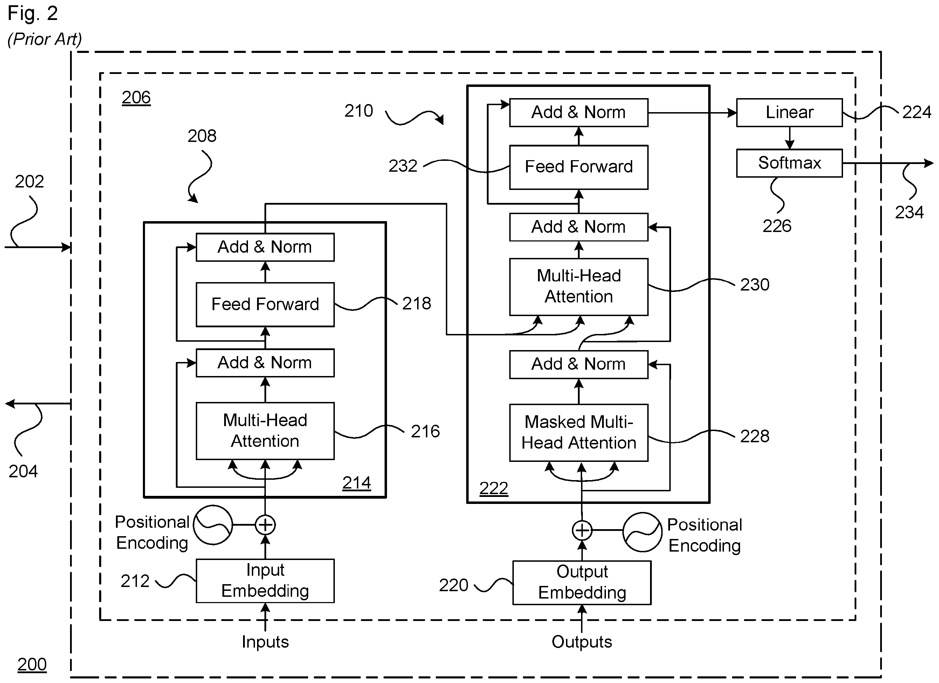

The techniques discussed herein may employ a self-attention architecture, e.g., the Transformer neural network encoder-decoder architecture. An exemplary general Transformer-type architecture is shown in Fig. 2, which is based on the arrangement shown in U.S. Patent No. 10,452,978, entitled "Attention-based sequence transduction neural networks", the entire disclosure of which is incorporated herein by reference.

System 200 of Fig. 2 is implementable as computer programs by processors of one or more computers in one or more locations. The system 200 receives an input sequence 202 and processes the input sequence 202 to transduce the input sequence 202 into an output sequence 204. The input sequence 202 has a respective network input at each of multiple input positions in an input order and the output sequence 204 has a respective network output at each of multiple output positions in an output order.

System 200 can perform any of a variety of tasks that require processing sequential inputs to generate sequential outputs. System 200 includes an attention-based sequence transduction neural network 206, which in turn includes an encoder neural network 208 and a decoder neural network 210. The encoder neural network 208 is configured to receive the input sequence 202 and generate a respective encoded representation of each of the network inputs in the input sequence. An encoded representation is a vector or other ordered collection of numeric values. The decoder neural network 210 is then configured to use the encoded representations of the network inputs to generate the output sequence 204. Generally, both the encoder 208 and the decoder 210 are attention-based. In some cases, neither the encoder nor the decoder includes any convolutional layers or any recurrent layers. The encoder neural network 208 includes an embedding layer (input embedding) 212 and a sequence of one or more encoder subnetworks 214. The encoder neural 208 network may N encoder subnetworks 214.

The embedding layer 212 is configured, for each network input in the input sequence, to map the network input to a numeric representation of the network input in an embedding space, e.g., into a vector in the embedding space. The embedding layer 212 then provides the numeric representations of the network inputs to the first subnetwork in the sequence of encoder subnetworks 214. The embedding layer 212 may be configured to map each network input to an embedded representation of the network input and then combine, e.g., sum or average, the embedded representation of the network input with a positional embedding of the input position of the network input in the input order to generate a combined embedded representation of the network input. In some cases, the positional embeddings are learned. As used herein, "learned" means that an operation or a value has been adjusted during the training of the sequence transduction neural network 206. In other cases, the positional embeddings may be fixed and are different for each position.

The combined embedded representation is then used as the numeric representation of the network input. Each of the encoder subnetworks 214 is configured to receive a respective encoder subnetwork input for each of the plurality of input positions and to generate a respective subnetwork output for each of the plurality of input positions. The encoder subnetwork outputs generated by the last encoder subnetwork in the sequence are then used as the encoded representations of the network inputs. For the first encoder subnetwork in the sequence, the encoder subnetwork input is the numeric representations generated by the embedding layer 212, and, for each encoder subnetwork other than the first encoder subnetwork in the sequence, the encoder subnetwork input is the encoder subnetwork output of the preceding encoder subnetwork in the sequence.

Each encoder subnetwork 214 includes an encoder self-attention sub-layer 216. The encoder self-attention sub-layer 216 is configured to receive the subnetwork input for each of the plurality of input positions and, for each particular input position in the input order, apply an attention mechanism over the encoder subnetwork inputs at the input positions using one or more queries derived from the encoder subnetwork input at the particular input position to generate a respective output for the particular input position. In some cases, the attention mechanism is a multi-head attention mechanism as shown. In some implementations, each of the encoder subnetworks 214 may also include a residual connection layer that combines the outputs of the encoder self-attention sub-layer with the inputs to the encoder self-attention sub-layer to generate an encoder self-attention residual output and a layer normalization layer that applies layer normalization to the encoder self-attention residual output. These two layers are collectively referred to as an "Add & Norm" operation in Fig. 2.

Some or all of the encoder subnetworks can also include a position-wise feed-forward layer 218 that is configured to operate on each position in the input sequence separately. In particular, for each input position, the feed-forward layer 218 is configured receive an input at the input position and apply a sequence of transformations to the input at the input position to generate an output for the input position. The inputs received by the position-wise feed-forward layer 218 can be the outputs of the layer normalization layer when the residual and layer normalization layers are included or the outputs of the encoder self-attention sub-layer 216 when the residual and layer normalization layers are not included. The transformations applied by the layer 218 will generally be the same for each input position (but different feed-forward layers in different subnetworks may apply different transformations).

In cases where an encoder subnetwork 214 includes a position-wise feed-forward layer 218 as shown, the encoder subnetwork can also include a residual connection layer that combines the outputs of the position-wise feed-forward layer with the inputs to the position-wise feed-forward layer to generate an encoder position-wise residual output and a layer normalization layer that applies layer normalization to the encoder position-wise residual output. As noted above, these two layers are also collectively referred to as an "Add & Norm" operation. The outputs of this layer normalization layer can then be used as the outputs of the encoder subnetwork 214.

Once the encoder neural network 208 has generated the encoded representations, the decoder neural network 210 is configured to generate the output sequence in an auto-regressive manner. That is, the decoder neural network 210 generates the output sequence, by at each of a plurality of generation time steps, generating a network output for a corresponding output position conditioned on (i) the encoded representations and (ii) network outputs at output positions preceding the output position in the output order. In particular, for a given output position, the decoder neural network generates an output that defines a probability distribution over possible network outputs at the given output position. The decoder neural network can then select a network output for the output position by sampling from the probability distribution or by selecting the network output with the highest probability.

Because the decoder neural network 210 is auto-regressive, at each generation time step, the decoder network 210 operates on the network outputs that have already been generated before the generation time step, i.e., the network outputs at output positions preceding the corresponding output position in the output order. In some implementations, to ensure this is the case during both inference and training, at each generation time step the decoder neural network 210 shifts the already generated network outputs right by one output order position (i.e., introduces a one position offset into the already generated network output sequence) and (as will be described in more detail below) masks certain operations so that positions can only attend to positions up to and including that position in the output sequence (and not subsequent positions). While the remainder of the description below describes that, when generating a given output at a given output position, various components of the decoder 210 operate on data at output positions preceding the given output positions (and not on data at any other output positions), it will be understood that this type of conditioning can be effectively implemented using shifting.

The decoder neural network 210 includes an embedding layer (output embedding) 220, a sequence of decoder subnetworks 222, a linear layer 224, and a softmax layer 226. In particular, the decoder neural network can include N decoder subnetworks 222. However, while the example of Fig. 2 shows the encoder 208 and the decoder 210 including the same number of subnetworks, in some cases the encoder 208 and the decoder 210 include different numbers of subnetworks. The embedding layer 220 is configured to, at each generation time step, for each network output at an output position that precedes the current output position in the output order, map the network output to a numeric representation of the network output in the embedding space. The embedding layer 220 then provides the numeric representations of the network outputs to the first subnetwork 222 in the sequence of decoder subnetworks.

In some implementations, the embedding layer 220 is configured to map each network output to an embedded representation of the network output and combine the embedded representation of the network output with a positional embedding of the output position of the network output in the output order to generate a combined embedded representation of the network output. The combined embedded representation is then used as the numeric representation of the network output. The embedding layer 220 generates the combined embedded representation in the same manner as described above with reference to the embedding layer 212.

Each decoder subnetwork 222 is configured to, at each generation time step, receive a respective decoder subnetwork input for each of the plurality of output positions preceding the corresponding output position and to generate a respective decoder subnetwork output for each of the plurality of output positions preceding the corresponding output position (or equivalently, when the output sequence has been shifted right, each network output at a position up to and including the current output position). In particular, each decoder subnetwork 222 includes two different attention sub-layers: a decoder self-attention sub-layer 228 and an encoder-decoder attention sub-layer 230. Each decoder self-attention sub-layer 228 is configured to, at each generation time step, receive an input for each output position preceding the corresponding output position and, for each of the particular output positions, apply an attention mechanism over the inputs at the output positions preceding the corresponding position using one or more queries derived from the input at the particular output position to generate a updated representation for the particular output position. That is, the decoder self-attention sub-layer 228 applies an attention mechanism that is masked so that it does not attend over or otherwise process any data that is not at a position preceding the current output position in the output sequence.

Each encoder-decoder attention sub-layer 230, on the other hand, is configured to, at each generation time step, receive an input for each output position preceding the corresponding output position and, for each of the output positions, apply an attention mechanism over the encoded representations at the input positions using one or more queries derived from the input for the output position to generate an updated representation for the output position. Thus, the encoder-decoder attention sub-layer 230 applies attention over encoded representations while the decoder self-attention sub-layer 228 applies attention over inputs at output positions.

In the example of Fig. 2, the decoder self-attention sub-layer 228 is shown as being before the encoder-decoder attention sub-layer in the processing order within the decoder subnetwork 222. In other examples, however, the decoder self-attention sub-layer 228 may be after the encoder-decoder attention sub-layer 230 in the processing order within the decoder subnetwork 222 or different subnetworks may have different processing orders. In some implementations, each decoder subnetwork 222 includes, after the decoder self-attention sub-layer 228, after the encoder-decoder attention sub-layer 230, or after each of the two sub-layers, a residual connection layer that combines the outputs of the attention sub-layer with the inputs to the attention sub-layer to generate a residual output and a layer normalization layer that applies layer normalization to the residual output. These two layers being inserted after each of the two sub-layers, both referred to as an "Add & Norm" operation.

Some or all of the decoder subnetwork 222 also include a position-wise feed-forward layer 232 that is configured to operate in a similar manner as the position-wise feed-forward layer 218 from the encoder 208. In particular, the layer 232 is configured to, at each generation time step: for each output position preceding the corresponding output position: receive an input at the output position, and apply a sequence of transformations to the input at the output position to generate an output for the output position. The inputs received by the position-wise feed-forward layer 232 can be the outputs of the layer normalization layer (following the last attention sub-layer in the subnetwork 222) when the residual and layer normalization layers are included or the outputs of the last attention sub-layer in the subnetwork 222 when the residual and layer normalization layers are not included. In cases where a decoder subnetwork 222 includes a position-wise feed-forward layer 232, the decoder subnetwork can also include a residual connection layer that combines the outputs of the position-wise feed-forward layer with the inputs to the position-wise feed-forward layer to generate a decoder position-wise residual output and a layer normalization layer that applies layer normalization to the decoder position-wise residual output. These two layers are also collectively referred to as an "Add & Norm" operation. The outputs of this layer normalization layer can then be used as the outputs of the decoder subnetwork 222.

At each generation time step, the linear layer 224 applies a learned linear transformation to the output of the last decoder subnetwork 222 in order to project the output of the last decoder subnetwork 222 into the appropriate space for processing by the softmax layer 226. The softmax layer 226 then applies a softmax function over the outputs of the linear layer 224 to generate the probability distribution (output probabilities) 234 over the possible network outputs at the generation time step. The decoder 210 can then select a network output from the possible network outputs using the probability distribution.

### Train-once-for-all Personalization Framework

The train-once TAPER framework employs a set of shareable basis models and a mixer predictor. The basis models have the same neural network architecture, each of which is expected to capture a certain specialty and therefore can be smaller in size than a large generic model. The mixer predictor then takes the user's task description (e.g., "classify bicycle, pedestrian, tree, obstacle for me." ) as input, and produces coefficients to linearly combine the weights (but not predictions) of the basis models, condensing them into a personalized model on the fly. As the system adapts to users by predicting corresponding coefficients, not by adjusting the bases, it requires no retraining and enjoys parameter efficiency (e.g., for cloud services). Moreover, since the resulting personalized model is just like a basis model in size, it enjoys computation and memory efficiency during inference and is suitable for edge deployment.

A stage-wise training procedure can be applied to effectively learn the bases and the mixer predictor. It has been found that naive end-to-end training for optimizing personalized accuracy may result in inferior bases that either generalize poorly or are not specialized. Thus, each stage may be dedicated to one desired property, starting with training each basis to generically classify all classes, followed by specializing them to different but fixed portions of data. The final stage then jointly refines the bases, together with learning the mixer predictor, to synthesize classifiers for randomly sampled tasks on the fly to optimize personalized accuracy.

As discussed further below, this approach has been validated on three visual recognition datasets, including ImageNet (see, e.g., "A large-scale hierarchical image database" by Deng et al., 2009), iNaturalist (see, e.g., "Benchmarking representation learning for natural world image collections" by Van Horn et al., 2021), and Domain-Net (see, e.g., "Moment matching for multi-source domain adaptation" by Peng et al., 2019) each of which captured a different personalization scenario. It is shown from test results that the implemented approach consistently outperformed the baselines in achieving a higher personalized accuracy. For instance, on ImageNet, TAPER was able to synthesize a ResNet-18 to achieve 96% accuracy on classifying 20 classes, 4% higher than ResNet-18 with class selection. The accuracy was even higher than ResNet-152 with class selection while using 1/5 of the model size. Even without end-user's task descriptions, it is shown that TAPER can still be self-specialized to the deployed environment conditioned on its past predictions. Critically, none of these improvements required further training, making TAPER truly personalization-friendly.

The approach begins with a problem definition. Here, define a task t as classification over a subset of classes $Y_t \subset Y$. A goal of personalization is to learn a predictor $f_t: X \mapsto Y_t$. To handle many tasks at the same time, it may be assumed that the task description $d_t$ is known for $Y_t$, and a framework $h(d_t)$ is to be constructed where given $d_t$, it will output $f_t$. Generally, the task description should provide information about the classes within the task in the form of vector representation. A large-scale dataset may be used with many classes covering $Y$, to learn the personalized-friendly function $f_t = h(d_t; V)$ parameterized by $V$. $h$ inferences on the task description as guidance for synthesizing a personalized model without further optimization.

As a motivating application of train-once-for-all personalization, the personalized model generator $h(\cdot, V)$ may be useful for cloud service deployments in that the server learns $V$ on a large-scale dataset and maintains it for serving many future users. In this type of scenario, the users are ultimately performing the tasks on end devices such as mobile phones, laptops, home appliances, drones, etc. The computation resources of such devices may be quite limited. This constrains the memory, power, and FLOPs budgets, which can make it unfavorable for the users to train or inference large models on the client side.

The TAPER approach provides scalability, on-the-fly personalization, and condensed personalized models. For instance, a large number of tasks (e.g., thousands or millions) may be summarized based on a model generator as a scalable approach. By modeling $h(d, V)$ as a translation from task descriptions to the model weight space, it allows a user to generate a personalized model without any training but just inference. This essentially bypasses the bottleneck of training cost and makes such a personalization system to be closer to a real-time API. The approach also provides an advantage that decouples the number of parameters of model generator $|V|$ and the output personalized models. Thus, more parameters could be used in $V$ for a powerful generator and condense it into lightweight personalized models for final deployment.

## Classifier Selection

Given an input $\chi$, consider $f$ as a general neural network $f(x; \theta)$ that employs a feature extractor parameterized by $\psi$ with a linear classifier $w = [w^{(1)}, ..., w^{(|y|)}]$ of $|Y|$ vectors for output predictions over all classes in $Y$. Denote by $\theta = \{\psi, w\}$. Let the task specified by a user be a few-way classification task t.

One strong baseline to personalize and fulfill the aspects is to assume a generic, non-personalized feature extractor is sufficient and build a personalized classifier $w_t$ on top of it by selecting only the row vectors in w for the relevant classes. That is, the personalized parameters for task t are $\theta_t = \{\psi, w_t\}$. As will be shown below, by training a generic feature extractor along with w in a standard way followed by classifier selection to retrieve $w_t$, it can largely outperform a non-personalized classifier. It serves as a strong baseline for the train-once-for-all personalization.

However, this may not be optimal, since the features may also need to be personalized to focus on more dedicated relationships between the classes within a task. There are two baseline solutions: (1) to adapt and save $\psi_t$ for every t, or not to personalize $\psi$ but to use a larger and more powerful feature extractor. They both have drawbacks - the former (1) may not be scalable in training cost for many tasks, and the latter (2) may be computationally unfavorable for end devices. The complete TAPER approach overcomes these drawbacks.

## Basis Models

The TAPER approach implements $\theta_t = h(-, V)$ for personalizing the whole network as $\theta_t = \{\psi_t, w_t\}$. The tasks may be assumed to share similarity (e.g., superclasses, domains, styles, etc.), thus, in one scenario each of the personalized model weight vectors $\theta_t$ can be represented with combinations of a much smaller set of basis vectors $\{v_1, ..., v_Q\}$, $|v| = |\theta|$. In the experiments discussed herein, Q is typically small (e.g., 10) compared to the number of tasks it possibly can handle (e.g., for 20-way classification, there are ($\binom{|y|}{20}$) combinations).

For every task, $\{v_q\}$ are combined into a personalized model $\theta_t$ with a combination vector $\alpha_t$, called "mixers" herein:

$$\theta_t(\alpha_t, V) = \sum_q \alpha_t |q| \times v_q \qquad \text{(Eq. 1)}$$

where the mixers $\alpha_t \in \Delta^{Q-1}$ is a Q-dimensional vector on the (Q-1)-simplex for convexly combining the basis models into a personalized model. Both $\alpha$ and $V$ are learned.

By adjusting only the mixers for a given user, the system can then quickly condense the bases into a compact personalized model for that user's future use (which, for instance, may be stored in memory either at the client device and/or on a back-end server). It is noted that the bases are trained to be combined layer by layer element-wisely on weights, not on the activation (the results of each layer). This is starkly different from a mixture of experts approach that maintains several experts and aggregates their predictions, where the model size and computation cost scale with the number of experts. In contrast, the TAPER approach outputs a single basis model of size $|\theta| = |v|$ and does not scale with Q. TAPER fulfills the requirements noted above, in particular: scalable, on-the-fly personalization, and lightweight. Unlike the baseline, it adapts the whole network, governs by the mixers over the set of bases.

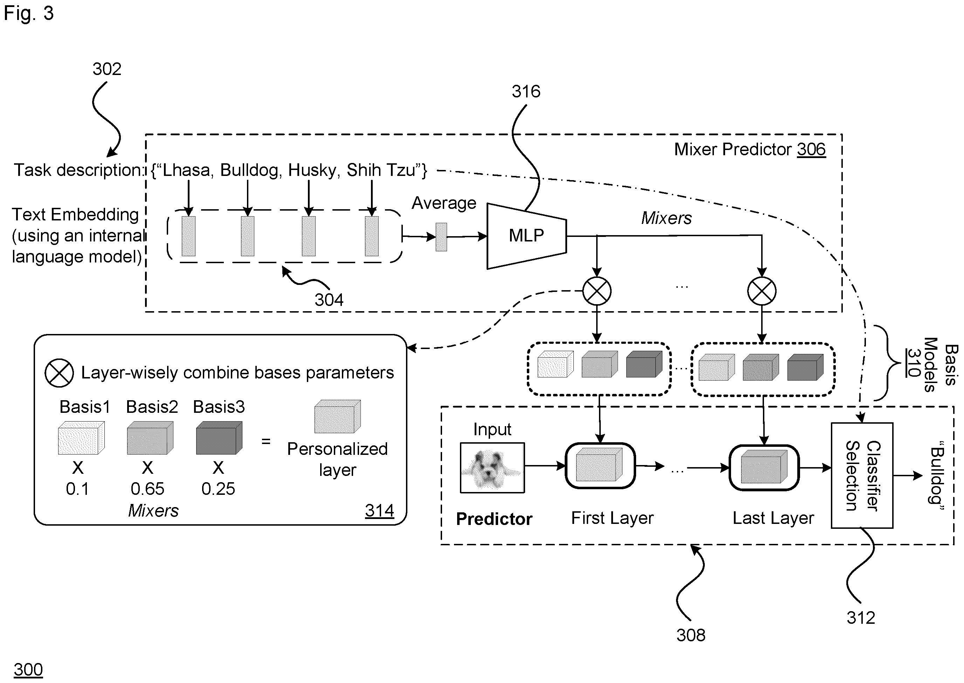

An overview 300 of the architecture is provided in Fig. 3. As shown at 302, a user first provides the task description (e.g., a few classes of interest, such as Lhasa, Bulldog, Husky, Shih Tzu, etc.), which will be encoded into a set of one or more text embeddings 304 and fed into the mixer predictor module 306 to generate the mixers. The parameters of each layer of the predictor module 308 are linear combinations of the basis models 310 based on the mixers. The final outcome of the predictor module 308 is a single basis personalized model, followed by classifier selection at 312. In this example, the output of the predictor is a type of dog ("Bulldog").

As shown in the expanded block 314, the mixing involves layer-wisely combining bases parameters to obtain a personalized layer. Each mixer may correspond to a single task. For instance, 10 breeds of birds may be associated with one mixer. Then, if 10 new breeds of birds are introduced, they may be associated with a different mixer. Thus, the system supports a mixer for each configuration (or item or category of interest) that the user is interest in.

Mixer predictor

A goal is to generate $\theta_t = h(d_t, V)$ given the task description. The task description vector is translated into the mixers by a mixer predictor network $\alpha_t = g(d_t; \phi)$, parameterized by $\phi$, for selecting the relevant bases dedicated to the task and combining them into a condensed personalized model. By way of example, a 4-layer multilayer perceptron (MLP, 316 in Fig. 3) is applied as the mixer predictor, which is shared by all tasks. In other examples, fewer (e.g., two) or more (e.g., 8 or 16, or more or less), layers can be implemented in the MLP 316.

Block-wise mixers

In one example, a single mixers vector $\alpha_t$ may be used for the whole network. In another example, each component of the network may have its own mixers such that it provides more freedom for $\alpha$ and $V$ to jointly learn to combine layer-wisely. In certain experiments on ResNet-18 discussed herein, one mixer vector was used for each of 4 blocks, i.e., $|\alpha_t| = 4Q$ instead of Q.

Training

Building on Equation (1), let the loss of a task to be $\mathcal{L}_t$, a TAPER objective function, can be defined as:

$$\min_{\phi, V = \{v_q\}_{q=1}^Q} \frac{1}{T} \sum_{t=1}^T \mathcal{L}_t(\theta_t),$$

where in which $\alpha$ is implemented to be a convex combination by a softmax function $\sigma(\cdot)$ in the experiments, as a form of regularization to avoid it becoming unbounded. Both the basis models and the mixer predictor can be learned.

In one scenario, Equation 2 can be optimized end-to-end in standard deep learning frameworks (e.g., Tensorflow) by initializing each basis with different random weights. Here, the bases $\{v_q\}$ cannot all be initialized with the same weights; otherwise it would reduce to a single basis network. Moreover, an individual basis may not sufficiently learn about the general knowledge, since each basis is likely selected by a few tasks and not trained on enough data, which can result in poor generalization. To better leverage the capacity of more bases, a multistage training approach can be implemented as follows.

In multistage training, each base should be generally knowledgeable prior to specialization. According to one aspect of the technology, the training may be done in the following stages. Stage 1: single basis pre-training. Here, the training approach begins with a single network $\theta^{(0)}$ to learn the general representation of the whole dataset in a standard way, e.g., with a cross-entropy or sigmoid approach.

Next is stage 2: specialized basis models. Here, the goal is to prepare $Q$ specialized networks as the initialization for the $Q$ bases. The dataset is split into $Q$ shards based on classes or domains. For each shard, $\theta^{(0)}$ is copied as the initialization, it is fine-tuned, and an "expert" model is collected as $v^q$. Note that the purpose here is to burn in each basis different domain knowledge as warm starts. Stage 3: learning to mix the bases for tasks. Here, the system jointly learn both the bases $\{v_q\}_{q=1}^{Q}$ and the mixer predictor $g(d; \phi)$ to combine them for all the tasks, guided by the task descriptions. Here, the classifier $w_t$ selected for each task is used.

This approach warm-starts TAPER with well-pre-trained specialized bases. Thus, the mixer predictor only needs to learn to "mix" them for a few epochs. This makes the developed cycles much shorter and more flexible. For instance, when a developer collects a new dataset for augmenting the existing bases for a particular model, it may only require fine-tuning from $\theta^{(0)}$, adding it as a new basis, and re-train the mixer predictor.

Task Descriptions

In one scenario, it may be assumed the personalized model generator $h$ takes a vector representation of the task and outputs the corresponding personalization model. This is realistic for some applications where (1) the users may not have training data while (2) the task that the user wants to perform can beforehand be pre-defined by the user's preference. The task descriptions not only instruct $h(d, V)$ what kind of personalized model it should generate but also more importantly, for the $h(d, V)$ to leverage the relationships between tasks during training.

The task description can be a flexible design choice. As an example, considering a classification task from ImageNet, a simple way is to create a bag-of-word (BoW) vector for a task, e.g., a 1000-way binary vector with the bits turned on for the corresponding class indexes. Here, the mixer $g(d_t; \phi)$ in TAPER can gradually realize the relationships among classes during training.

Another way is to explicitly leverage the semantics of the classes by extracting the textual class names (e.g., "Red wolf" or "Buckeye"), encode each of them into a text embedding via an external pre-trained language model, and average over classes into a vector representation $d_t$. In certain experiments discussed herein, the 1024-dimension text embedding was precomputed for each class, such as following the prompt ensemble approach (e.g., as described in "Learning transferable visual models from natural language supervision" by Radford et al., 2021) and keep them frozen.

Using textual embedding takes the advantage of large-scale language modeling and is more convenient as a compact fixed-dimension representation, unlike BoW, depends on the class size. In the testing results described below, it is shown that it also allows the users to use flexible free language descriptions (e.g., "A fish of deep water having a light organ") instead of specifying the class name ("flashlight fish").

Testing/Experiments

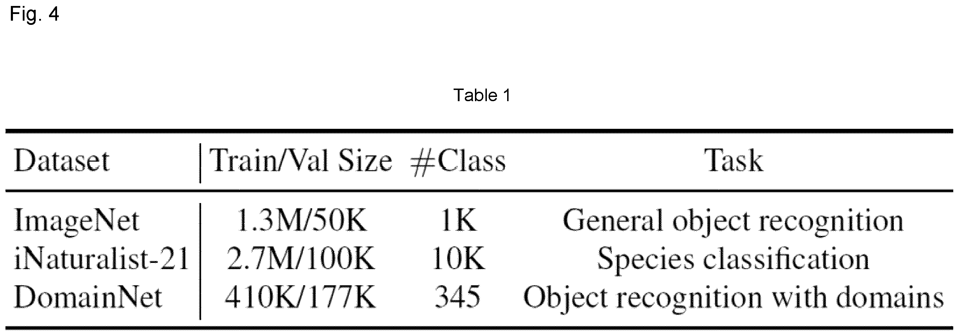

Validation of the effectiveness of TAPER on three large-scale visual recognition datasets was evaluated, in particular on the ImageNet, iNaturalist, and DomainNet (see, e.g., "Moment matching for multi-source domain adaptation" by Peng et al., 2019) datasets, each of which captures a different personalization scenario. All of these datasets provide single-label classification tasks and with a resolution of 224 × 224. The summary is in Table 1 of Fig. 4. For each dataset, the tasks were constructed as 20-way classification by sampling from the label space $Y$. Each image from the training/validation set was randomly assigned with a task description as discussed herein for training (sampled every epoch) and evaluation, respectively. The goal was to accurately predict the labels from the whole set $Y$ and the metric was the standard top-1 accuracy.

A training process similar to the standard on ImageNet was used for all the datasets, including data pre-processing/augmentation and learning rate schedule (initial learning rate was 0.1 and decay by 0.1 every 30 epochs). A stochastic gradient descent (SGD) optimizer was used with momentum = 0.9, batch size = 128, and weight decay = 0.0001. The experiments were implemented using JAX, and training was done on randomly-initialized ResNet-18 networks with cross-entropy by default (see, e.g., "Deep residual learning for image recognition" by He et al., 2016).

For TAPER, in one scenario each of the basis models uses the same architecture, and each layer is linearly combined via the mixers. The mixer predictor may be a 4-layer MLP (with batchnorms and ReLU non-linearity between each layer) which maps the 1024-dim task description text embedding to the blockwise mixers. For the three-stage training discussed above, each stage may be trained sequentially for 100/5/20 epochs, for the 3 stages, respectively. Thus, for evaluation purposes during testing, the system was trained 125 epochs for the baseline approaches.

In one testing scenario, ImageNet was used. In reality, the tasks may not be random combinations of classes but somehow have correlations depending on the use case. For instance, a user in a driving scene may ask "Classify bicycle, pedestrian, tree, obstacle for me". Another user may ask for a classifier for a kitchen or for different types of electronics; e.g., "coffee pot" and "espresso maker" are more likely in the same task. To simulate this more realistic/meaningful scenario without losing generality, each image can be assigned a k-way task (e.g., with k = 20 by default, although k could be 5, 10, 30, 40, etc. or more or less) by sampling from classes that are the nearest 2k synsets in the Word-Net knowledge graph based on its ground-truth label (which is included in the task as well). Here, each class may be encoded with averaging over classes as the task embedding sot that it will not leak the ground-truths. By way of example, 10 bases were used ImageNet experiments. For stage 2 of TAPER training, the dataset was divided into 10 chunks by sharding the 1000 classes (for instance, 100 classes per chunk), which is to initialize the bases as slightly different specialists.

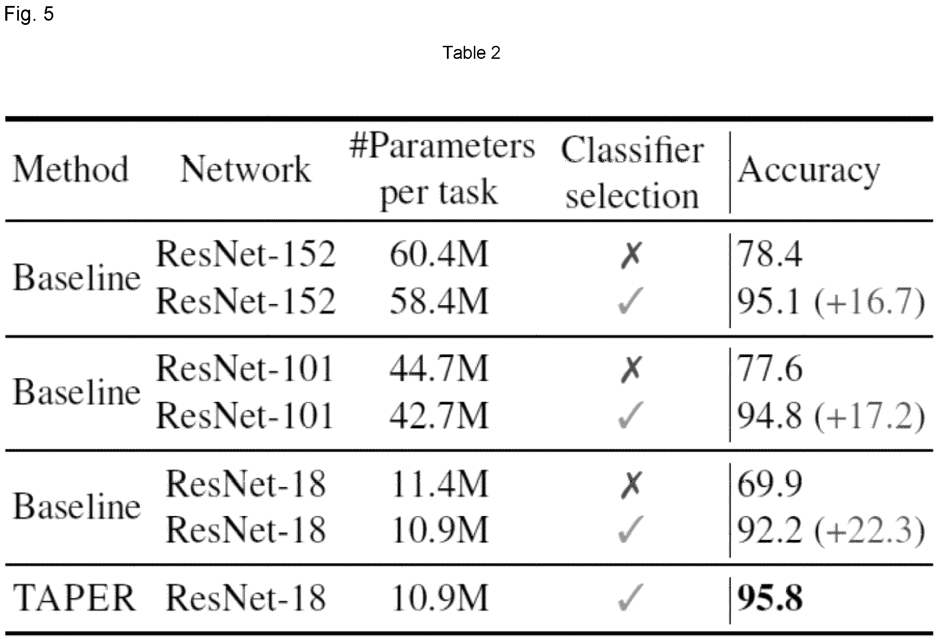

The mixer predictor was jointly trained with bases to personalize conditioned on the task description. The results of TAPER and the baseline approaches using different sizes of networks are shown in Table 2 of Fig. 5 (Accuracy (%) on ImageNet with 20-way tasks.).

It can be seen that personalization is valuable. Two observations are as follows. First, increasing the network depths without personalization (ignoring the tasks) improves the accuracy but saturates at around 80%. Second simply post-processing a ResNet-18 with classifier selection already achieves 92.2%, i.e., a +22.3% gain. This demonstrates the importance of personalization and the feasibility of train-once-for-all personalization.

The testing demonstrates that TAPER outperformed the strong baseline, with much smaller networks. The baselines kept the features frozen. TAPER better leverages the model capacity and outputs a fully-personalized network for every task, thus, the adapted ResNet-18 outperformed the classifier selection with a ResNet-152, using only roughly 1/5 of the parameters. Note that, although the baseline uses a single feature extractor, it does not have an advantage on parameter efficiency from the users' perspective since it still needs to be copied and delivered to each user's end device. TAPER's ResNet-18 outperformed the baseline counterpart by 3.6%.

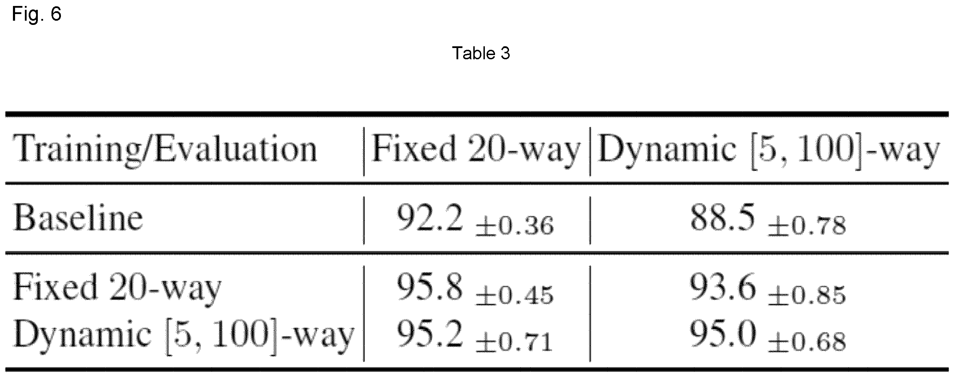

The testing verified the effects of the number of classes in a task. TAPER takes a task vector representation as input and may handle tasks with different class sizes in one network. In Table 3 of Fig. 6, training and cross-evaluate TAPER were considered in two scenarios (TAPER on ImageNet with different classes per task): the tasks were either fixed 20-way or dynamically drawn with 5 ~ 100 ways. It is observed that TAPER can handle all the cases reasonably well, where it is somewhat better if training and evaluation are matched on the same scenario.

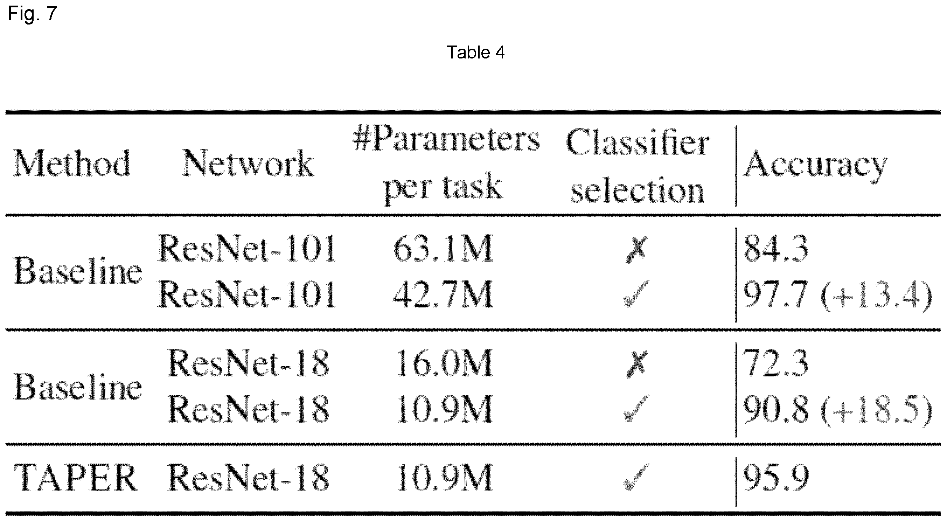

Another concrete use case of personalization is fine-grained predictions in a specific topic. For instance, an entomologist might want to classify different kinds of moths. TAPER is particularly helpful, by way of example, for supporting scientific research in the wild that has constraints on computation resources or Internet bandwidth. A scenario was simulated on the iNaturalist datasets that have 10,000 species from 11 super-categories such as "Mammals" and "Reptiles". For testing, each image was constructed with a 20-way task description by sampling other classes from the same super-category. Q = 3 × 11 bases was used for TAPER here. In Table 4, of Fig. 7 (Accuracy (%) on iNaturalist with 20-way tasks) it can again be seen TAPER's superiority - comparable performance and fewer parameters compared to the baseline. Notably, here one can see the clear benefits of classifier selection. When the number of classes is large, cutting the classes that are not likely of the user's interest can save significant parameters and achieve higher accuracy. The classes may be determined to not be of interest to a user via direct user input (e.g., selection of a set or type of classes by the user), or indirectly (e.g., inferred based upon user preferences, selections and/or prior interaction with the system.

The task information passed to the TAPER mixer predictor can be a flexible description of the tasks of users' interest(s). One can go beyond classes and consider if the users provide domain information related to the image styles. For instance, a user may ask: "help me classify flowers in paintings" or "I want a cartoon animals classifier".

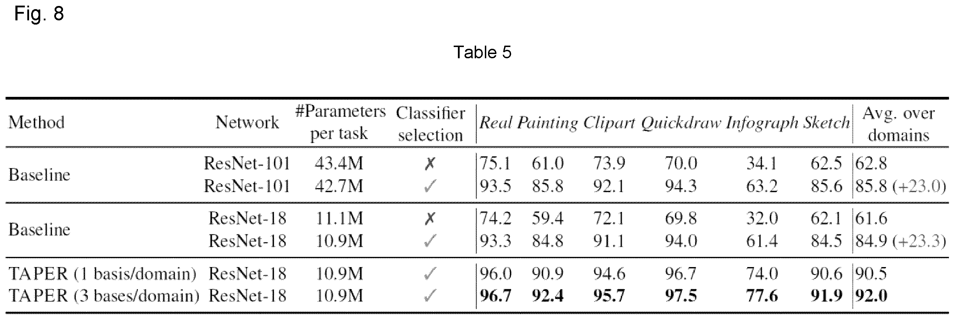

Such a use case was investigated on the DomainNet dataset that provides 6 domains of image styles over 345 common objects. Here, the task descriptions were prepared by attaching the domain name before each of the class names, e.g., "This is a sketch airplane.", encoding each class to retrieve the textual embedding, and averaging over the classes within the task. For this testing, each task was from one domain but with different 20 class combinations. Here, stage 2 training (specialized basis models) was performed on the division of domains. The test accuracy per domain is summarized in Table 5 of Fig.8. It can be seen that TAPER consistently outperformed the baselines for all the domains, more on the harder domains (e.g., Infograph and Sketch). This underscores why TAPER improves by using 1 basis per domain (intuitively, it may depend more on domains) - the ideal features are likely domain-specific. By adding up to 3 bases per domain (or more), TAPER can further improve since it has more freedom to personalize by considering both the domains and classes.

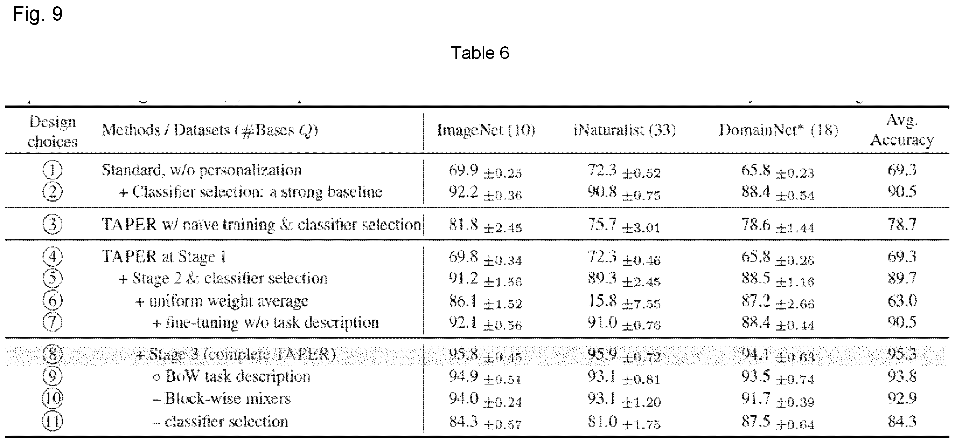

Table 6 of Fig. 9 presents the results of an ablation study for different design choices. In Table 6, the indentation with different symbols denotes adding (+) / removing (-) a component, or using a variant (∘). The ±mean std is reported based on 3 runs on ResNet-18. In addition, accuracy here is averaged over examples *). The individual design choices are listed as (1), (2), ..., (11) in the table. The following can be observed: First TAPER with naive training (3) outperforms a nonpersonalized network (1) but not the classifier selection baseline (2), even when (3) is attached with classifier selection already. This may be because the bases were not properly trained and poor in generalization. As sanity checks, TAPER's initial stage 1 (4) was basically configured as (1) but trained less (here, training more cannot improve). Stage 2 training (5) was slightly worse than (2), as expected, since the models were only specialized on a shard of the dataset. Simply averaging them on weights (6) will not become a stronger model; however, fine-tuning it (7) can recover it to (2).

From (8) to (11), TAPER leveraged the task descriptions to personalize the features by the mixer predictor, thus outperforming the baseline (2). Per this testing, text embedding is shown to be better for task descriptions compared to BoW vectors (9). It may be preferred to have mixers block-wise (10). Removing classifier selection from TAPER (11) is shown to have a big impact. However, comparing (11) to (1) and (4) validates that TAPER indeed learned personalized features. Moreover, complete TAPER (8) consistently performed the best in the testing.

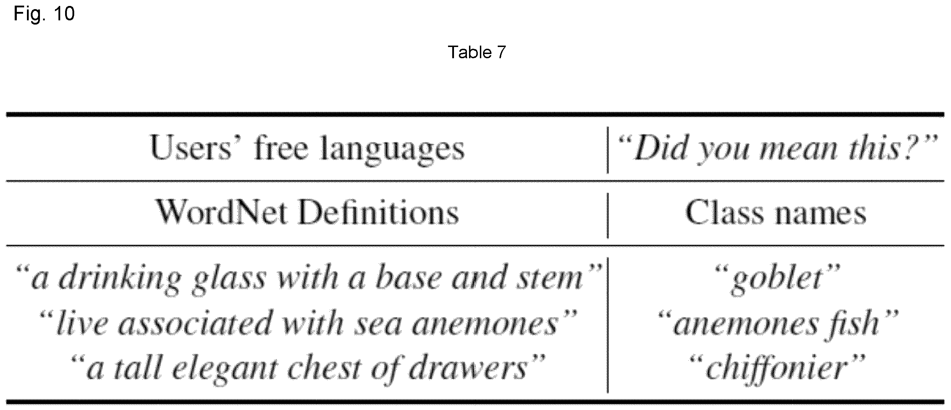

In one scenario, a pre-trained language encoder may be used to embed the class names via prompts. Since the language encoder can handle general textual descriptions, this allows the users to enjoy more flexibility in their descriptions. To demonstrate such an advantage, TAPER was trained in one example with class name descriptions, but in evaluation, they were replaced with free language that did not describe the class names explicitly for encoding, by using the definitions in the WordNet dictionary. Table 7 of Fig. 10 illustrates several examples. TAPER is robust to such replacement. In ImageNet experiments, it achieved 94.2% accuracy, slightly dropped from 95.8% (see Table 2). The mixers predicted from class names and free languages for each class were compared, which showed a high 0.92 cosine similarity as they select similar bases.

Self-improvement may be achieved without task descriptions. It has been shown that TAPER can provide some training-free personalization even without a description but given the unlabeled test data of the task. This is useful in some scenarios such as a smart surveillance camera that keeps collecting images from the same environment, where the user wants to refine the classifier for future predictions (e.g., to detect a particular object or event). This can be done as follows. First, begin with a standard, non-personalized classifier (e.g., the stage 1 model discussed above) to predict a batch of test data. Second, extract the top most common pseudo labels and use them to construct the task description.

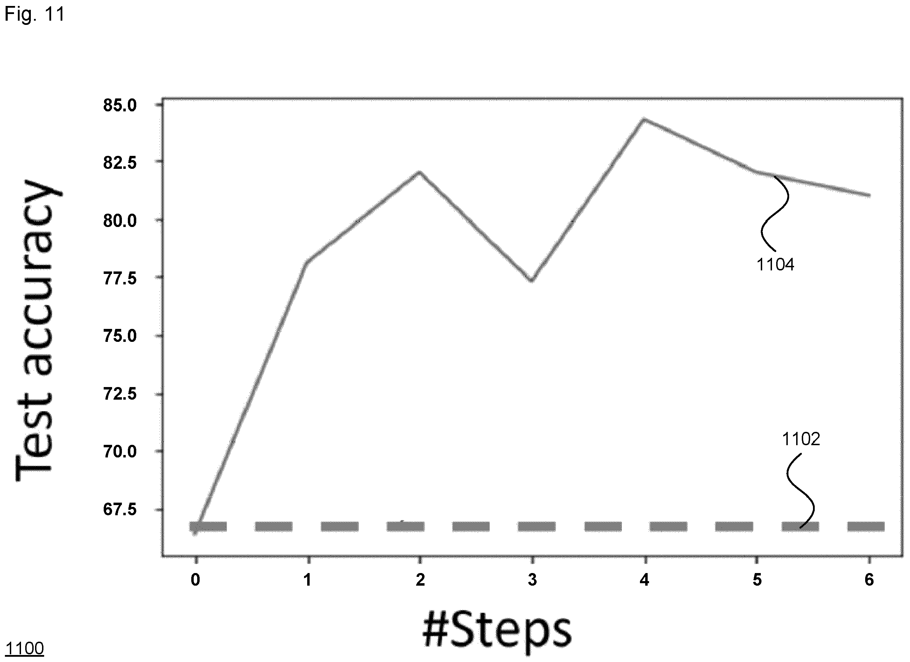

Third, use the mixer predictor to combine a personalized model and repeat from the second step over time. Thus, in each step, the system predicts the top common classes in the test batch, retrieves the task embedding, and re-generates the personalized model. Fig. 11 is a chart 1100 demonstrating that with a case of a 20-way task sampled from ImageNet, the system can gradually estimate the task and improve along with seeing more test data. Here, the non-personalized results 1102 remain flat, while the test accuracy for the personalized results 1104 show significant improvement as the number of steps increases.

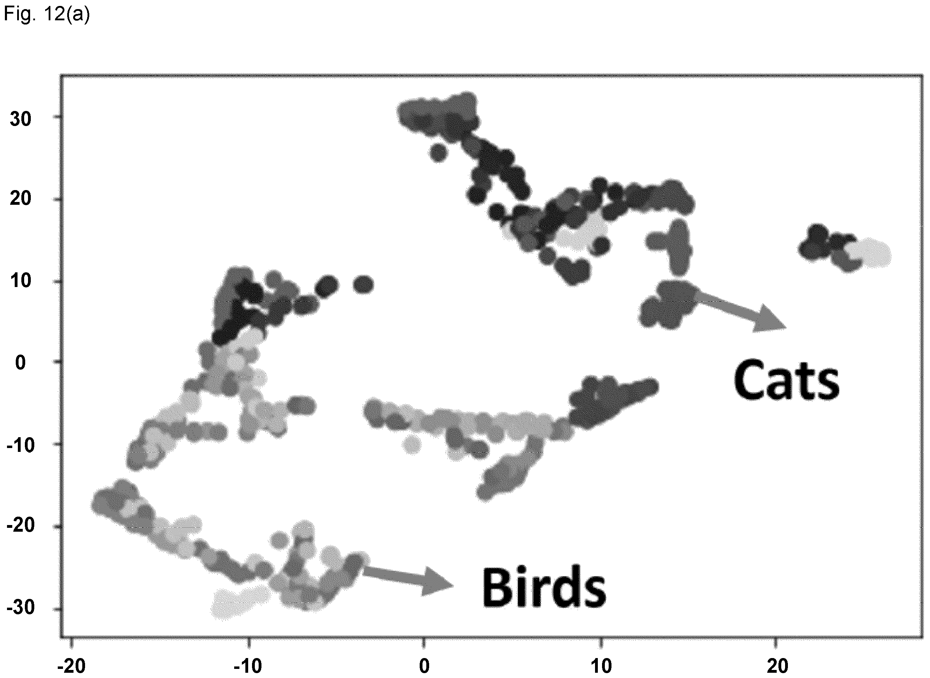

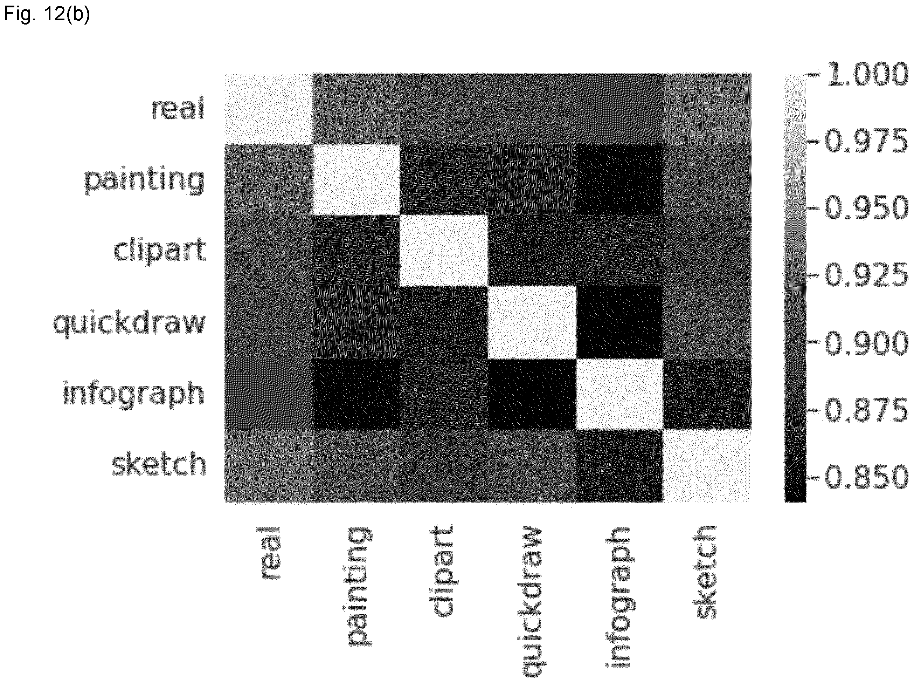

To understand if the bases and the mixers are learned to tailor different tasks, the mixers can be visualized ($\alpha_t$) with pairwise cosine similarity of the parameters of bases $V$ shown in Figs. 12(a) and 12(b). Fig. 12(a) visualizes t-SNE of mixes, in which the predicted mixers of tasks contain "Bird" and "Cat" in ImageNet (with each task colored by the sum of sorted class IDs). Fig. 12(b) illustrates a similarity matrix of the basis parameters learned on DomainNet, with one basis for each domain. It can be seen that different tasks leverage different specialized bases.

The above-described technology may be utilized in a compact machine learning framework. Based on a task description, which may be directly provided by a user or determined based on user input or interaction with the system (e.g., searching for videos about a particular topic or a particular item of interest), text embeddings can be created and fed into a mixer predictor. The mixer predictor generates a set of mixers, which correspond to personalized layers that form a single basis personalized model. Classifier selection uses this personalized model to generate one or more results, which may identify a classified object (e.g., from an image or video).

## *Example Computing Architecture*

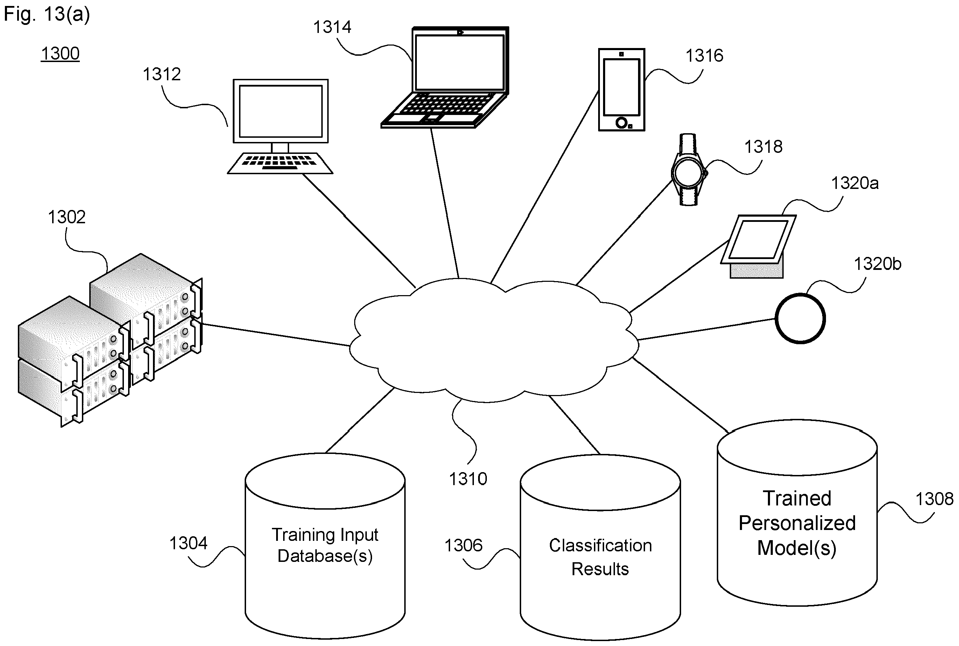

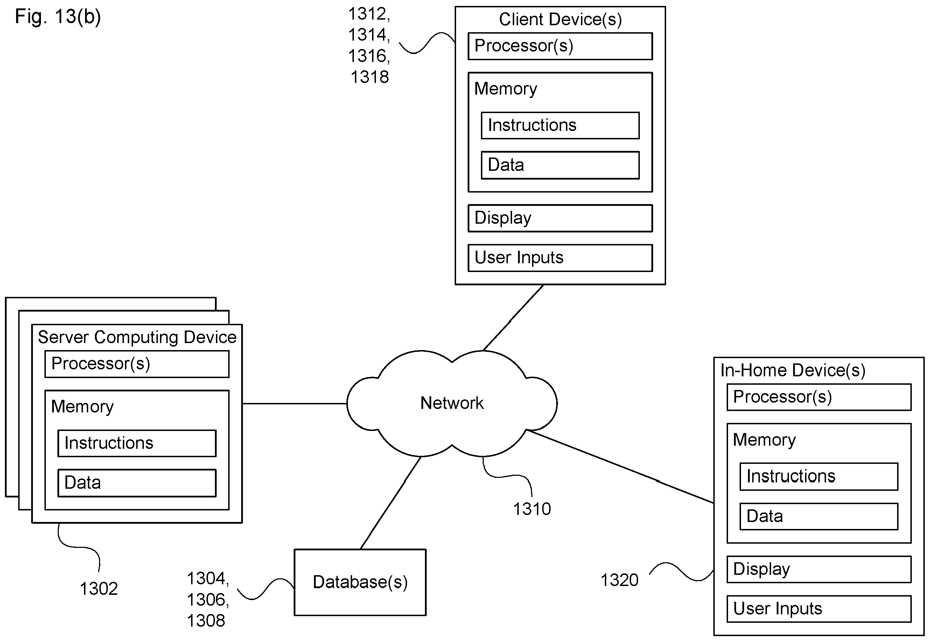

The personalized machine learning training discussed herein may be trained on one or more tensor processing units (TPUs), CPUs or other computing in accordance with the features disclosed herein. One example computing architecture is shown in Figs. 13(a) and 13(b). In particular, Figs. 13(a) and (b) are pictorial and functional diagrams, respectively, of an example system 1300 that includes a plurality of computing devices and databases connected via a network. For instance, computing device(s) 1302 may be implemented as a cloud-based server system. Databases 1304, 1306 and 1308 may store, e.g., training inputs (e.g., video segments or clips, or full videos, a text corpus, forms, etc.), classification results other output from analysis based on the model(s), and/or trained personalized models, respectively. The server system may access the databases via network 1310. Client devices may include one or more of a desktop computer 1312, a laptop or tablet PC 1314, a mobile phone or PDA 1316, a wearable device 1318 such as a smartwatch or head-mounted display (e.g., a virtual reality headset), in-home devices such as smart display 1320a and/or a smart home device 1320b, etc.

As shown in Fig. 13(b), each of the computing devices 1302 and 1312-1320 may include one or more processors, memory, data and instructions. The memory stores information accessible by the one or more processors, including instructions and data (e.g., models) that may be executed or otherwise used by the processor(s). The memory may be of any type capable of storing information accessible by the processor(s), including a computing device-readable medium. The memory is a non-transitory medium such as a hard-drive, memory card, optical disk, solid-state, etc. Systems may include different combinations of the foregoing, whereby different portions of the instructions and data are stored on different types of media. The instructions may be any set of instructions to be executed directly (such as machine code) or indirectly (such as scripts) by the processor(s). For example, the instructions may be stored as computing device code on the computing device-readable medium. In that regard, the terms "instructions", "modules" and "programs" may be used interchangeably herein. The instructions may be stored in object code format for direct processing by the processor, or in any other computing device language including scripts or collections of independent source code modules that are interpreted on demand or compiled in advance.

The processors may be any conventional processors, such as commercially available CPUs, TPUs, graphical processing units (GPUs), etc. Alternatively, each processor may be a dedicated device such as an ASIC or other hardware-based processor. Although Fig. 13(b) functionally illustrates the processors, memory, and other elements of a given computing device as being within the same block, such devices may actually include multiple processors, computing devices, or memories that may or may not be stored within the same physical housing. Similarly, the memory may be a hard drive or other storage media located in a housing different from that of the processor(s), for instance in a cloud computing system of server 1302. Accordingly, references to a processor or computing device will be understood to include references to a collection of processors or computing devices or memories that may or may not operate in parallel.

The input data, such as video segments or whole videos, may be operated on by one or more trained personalized models to generate one or more video classifications, object-aware attention module outputs updated features of patch tokens, or other data generated based on utilization of the personalized model(s). The client devices may utilize such information in various apps or other programs to perform video understanding, quality assessment or other metric analysis, recommendations, classification, search, etc. This could include assigning rankings or video classifications to different objects detected in imagery based upon the results of the processing.

The computing devices may include all of the components normally used in connection with a computing device such as the processor and memory described above as well as a user interface subsystem for receiving input from a user and presenting information to the user (e.g., text, imagery, videos and/or other graphical elements). The user interface subsystem may include one or more user inputs (e.g., at least one front (user) facing camera, a mouse, keyboard, touch screen and/or microphone) and one or more display devices (e.g., a monitor having a screen or any other electrical device that is operable to display information (e.g., text, imagery and/or other graphical elements). Other output devices, such as speaker(s) may also provide information to users.

The user-related computing devices (e.g., 1312-1320) may communicate with a back-end computing system (e.g., server 1302) via one or more networks, such as network 1310. The network 1310, and intervening nodes, may include various configurations and protocols including short range communication protocols such as Bluetooth™, Bluetooth LE™, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any device capable of transmitting data to and from other computing devices, such as modems and wireless interfaces.

In one example, computing device 1302 may include one or more server computing devices having a plurality of computing devices, e.g., a load balanced server farm or cloud computing system, that exchange information with different nodes of a network for the purpose of receiving, processing and transmitting the data to and from other computing devices. For instance, computing device 1302 may include one or more server computing devices that are capable of communicating with any of the computing devices 1312-1320 via the network 1310.

Trained personalized models or information or other data derived from the approaches discussed herein may be shared by the server with one or more of the client computing devices. Alternatively or additionally, the client device(s) may maintain their own databases, personalized models, etc.

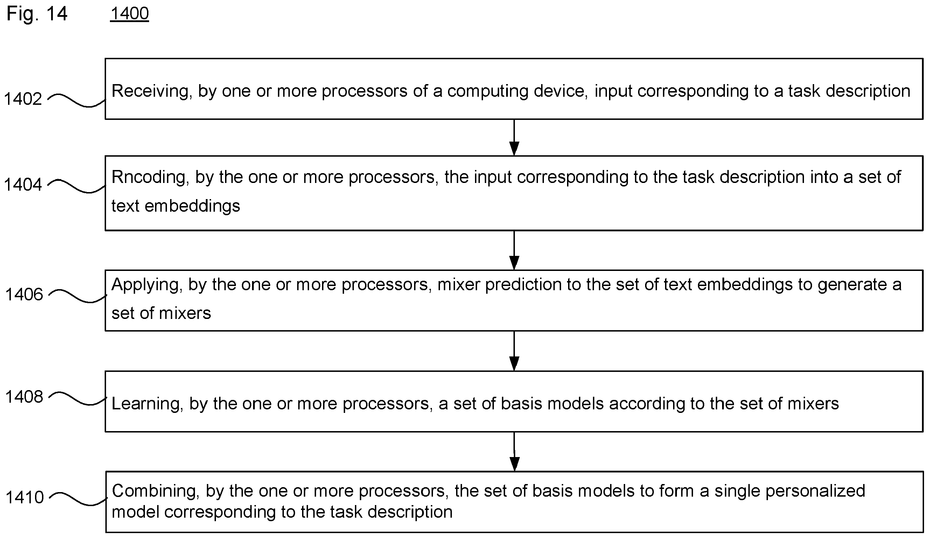

Fig. 14 illustrates an example flow diagram 1400 for a method in accordance with aspects of the technology. The method includes receiving, by one or more processors of a computing device, input corresponding to a task description at block 1402. The, at block 1404, the method includes encoding, by the one or more processors, the input corresponding to the task description into a set of text embeddings. At block 1406 the method includes applying, by the one or more processors, mixer prediction to the set of text embeddings to generate a set of mixers. At block 1408 the method includes learning, by the one or more processors, a set of basis models according to the set of mixers. And at block 1410, the method includes combining, by the one or more processors, the set of basis models to form a single personalized model corresponding to the task description.

Although the technology herein has been described with reference to particular embodiments, it is to be understood that these embodiments are merely illustrative of the principles and applications of the present technology. It is therefore to be understood that numerous modifications may be made to the illustrative embodiments and that other arrangements may be devised without departing from the spirit and scope of the present technology as defined by the appended claims.

**Claims**

1. A computer-implemented method, comprising:

   receiving, by one or more processors of a computing device, input corresponding to a task description;
   encoding, by the one or more processors, the input corresponding to the task description into a set of text embeddings;
   applying, by the one or more processors, mixer prediction to the set of text embeddings to generate a set of mixers;
   learning, by the one or more processors, a set of basis models according to the set of mixers; and
   combining, by the one or more processors, the set of basis models to form a single personalized model corresponding to the task description.

2. The method of claim 1, wherein each basis model in the set of basis models shares a neural network architecture with the other basis models in the set of basis models.

3. The method of claim 1 or claim 2, wherein applying the mixer prediction includes applying a multilayer perceptron to the set of text embeddings.

4. The method of claim 3, wherein the set of mixers corresponds to a single mixers vector associated with each layer of the multilayer perceptron.

5. The method of claim 3, wherein each mixer of the set of mixers corresponds to a given mixers vector associated with a given layer of the multilayer perceptron.

6. The method of any preceding claim, wherein encoding the input corresponding to the task description into the set of text embeddings includes extracting textual class names and encoding each textual class name into a given one of the set of text embeddings.

7. The method of any preceding claim, wherein the single personalized model has a task lost $\mathcal{L}_t$ expressed according to:

$$\min_{\phi, V = \{v_q\}_{q=1}^{Q}} \frac{1}{T} \sum_{t=1}^{T} \mathcal{L}_t(\theta_t),$$

   where in which $\theta_t$ is personalized parameters for task $t$, each $v_q$ is a basis vector, $V$ is a model generator, $\alpha_t$ is a vector for a mixer predictor network having $d_t$ as a task description and parameterized by $\phi$.

8. The method of claim 7, wherein $\alpha_t$ is implemented according to a softmax function $\sigma(\cdot)$.

9. The method of claim 7 or claim 8, wherein the personalized model does not scale with Q.

10. The method of any preceding claim, wherein both the set of basis models and the mixer prediction are learned.

11. The method of any preceding claim, wherein the personalized model is trained starting with a single network $\theta^{(0)}$ to learn a general representation of a training dataset.

**12.** The method of claim 11, wherein the personalized model is further trained by splitting the training dataset into a plurality of shards based on either classes or domains.

**13.** The method of claim 12, wherein, for each shard, $\theta^{(0)}$ is copied as an initialization and fine-tuned to collect an expert model, and/or wherein the personalized model is further trained by jointly learning both the set of basis models and the mixer prediction according to the task description.

**14.** The method of any preceding claim, further comprising applying the single personalized model to a received input to generate a predictor output corresponding to a classified object, and optionally using the predictor output is used to implement at least one of video understanding, quality assessment, provide a recommendation, perform a classification, or performing a search associated with the classified object.

**15.** A computing system, comprising:

a user interface configured to receive input corresponding to a task description; and
one or more processors configured to:

encode the input corresponding to the task description into a set of text embeddings;
apply mixer prediction to the set of text embeddings to generate a set of mixers;
cause a set of basis models to learn according to the set of mixers; and
combine the set of basis models to form a single personalized model corresponding to the task description.

Fig. 1

108a

Bulldog: 0.91
Lhasa: 0.05
Husky: 0.02
...

108b

Mug: 0.85
Cup: 0.12
Fork: 0.03
...

108c

Horse: 0.87
Zebra: 0.11
Tiger: 0.05
...

User(s)

Give me a *dog* classifier
106a

A classifier for *kitchen*
106b

I want to classify *cartoon animals*
106c

Server

TAPER
104

Large Dataset
102

100

EP 4 459 506 A1

Fig. 2
*(Prior Art)*

Linear — 224

Softmax — 226

234

Add & Norm

Feed Forward — 232

Add & Norm

Multi-Head Attention — 230

Add & Norm

Masked Multi-Head Attention — 228

222

Positional Encoding

Output Embedding — 220

Outputs

210

206

Add & Norm

Feed Forward — 218

Add & Norm

Multi-Head Attention — 216

214

208

Positional Encoding

Input Embedding — 212

Inputs

202

204

200

**Fig. 3**

Fig. 4

Table 1

EP 4 459 506 A1

| Dataset | Train/Val Size | #Class | Task |
|---|---|---|---|
| ImageNet | 1.3M/50K | 1K | General object recognition |
| iNaturalist-21 | 2.7M/100K | 10K | Species classification |
| DomainNet | 410K/177K | 345 | Object recognition with domains |

Fig. 5

Table 2

| Method | Network | #Parameters per task | Classifier selection | Accuracy |
|---|---|---|---|---|
| Baseline | ResNet-152 | 60.4M | ✗ | 78.4 |
| | ResNet-152 | 58.4M | ✓ | 95.1 (+16.7) |
| Baseline | ResNet-101 | 44.7M | ✗ | 77.6 |
| | ResNet-101 | 42.7M | ✓ | 94.8 (+17.2) |
| Baseline | ResNet-18 | 11.4M | ✗ | 69.9 |
| | ResNet-18 | 10.9M | ✓ | 92.2 (+22.3) |
| TAPER | ResNet-18 | 10.9M | ✓ | **95.8** |

Fig. 6

Table 3

| Training/Evaluation | Fixed 20-way | Dynamic [5, 100]-way |
|---|---|---|
| Baseline | 92.2 $\pm$0.36 | 88.5 $\pm$0.78 |
| Fixed 20-way | 95.8 $\pm$0.45 | 93.6 $\pm$0.85 |
| Dynamic [5, 100]-way | 95.2 $\pm$0.71 | 95.0 $\pm$0.68 |

EP 4 459 506 A1

Fig. 7

Table 4

| Method | Network | #Parameters per task | Classifier selection | Accuracy |
|---|---|---|---|---|
| Baseline | ResNet-101 | 63.1M | ✗ | 84.3 |
| | ResNet-101 | 42.7M | ✓ | 97.7 (+13.4) |
| Baseline | ResNet-18 | 16.0M | ✗ | 72.3 |
| | ResNet-18 | 10.9M | ✓ | 90.8 (+18.5) |
| TAPER | ResNet-18 | 10.9M | ✓ | 95.9 |

EP 4 459 506 A1

Fig. 8

Table 5

| Method | Network | #Parameters per task | Classifier selection | Real | Painting | Clipart | Quickdraw | Infograph | Sketch | Avg. over domains |
|---|---|---|---|---|---|---|---|---|---|---|
| Baseline | ResNet-101 | 43.4M | ✗ | 75.1 | 61.0 | 73.9 | 70.0 | 34.1 | 62.5 | 62.8 |
| | ResNet-101 | 42.7M | ✓ | 93.5 | 85.8 | 92.1 | 94.3 | 63.2 | 85.6 | 85.8 (+23.0) |
| Baseline | ResNet-18 | 11.1M | ✗ | 74.2 | 59.4 | 72.1 | 69.8 | 32.0 | 62.1 | 61.6 |
| | ResNet-18 | 10.9M | ✓ | 93.3 | 84.8 | 91.1 | 94.0 | 61.4 | 84.5 | 84.9 (+23.3) |
| TAPER (1 basis/domain) | ResNet-18 | 10.9M | ✓ | 96.0 | 90.9 | 94.6 | 96.7 | 74.0 | 90.6 | 90.5 |
| TAPER (3 bases/domain) | ResNet-18 | 10.9M | ✓ | **96.7** | **92.4** | **95.7** | **97.5** | **77.6** | **91.9** | **92.0** |

Fig. 9

Table 6

| Design choices | Methods / Datasets (#Bases $Q$) | ImageNet (10) | iNaturalist (33) | DomainNet* (18) | Avg. Accuracy |
|---|---|---|---|---|---|
| ① | Standard, w/o personalization | 69.9 ±0.25 | 72.3 ±0.52 | 65.8 ±0.23 | 69.3 |
| ② | + Classifier selection: a strong baseline | 92.2 ±0.36 | 90.8 ±0.75 | 88.4 ±0.54 | 90.5 |
| ③ | TAPER w/ naïve training & classifier selection | 81.8 ±2.45 | 75.7 ±3.01 | 78.6 ±1.44 | 78.7 |
| ④ | TAPER at Stage 1 | 69.8 ±0.34 | 72.3 ±0.46 | 65.8 ±0.26 | 69.3 |
| ⑤ | + Stage 2 & classifier selection | 91.2 ±1.56 | 89.3 ±2.45 | 88.5 ±1.16 | 89.7 |
| ⑥ | + uniform weight average | 86.1 ±1.52 | 15.8 ±7.55 | 87.2 ±2.66 | 63.0 |
| ⑦ | + fine-tuning w/o task description | 92.1 ±0.56 | 91.0 ±0.76 | 88.4 ±0.44 | 90.5 |
| ⑧ | + Stage 3 (complete TAPER) | 95.8 ±0.45 | 95.9 ±0.72 | 94.1 ±0.63 | 95.3 |
| ⑨ | ○ BoW task description | 94.9 ±0.51 | 93.1 ±0.81 | 93.5 ±0.74 | 93.8 |
| ⑩ | − Block-wise mixers | 94.0 ±0.24 | 93.1 ±1.20 | 91.7 ±0.39 | 92.9 |
| ⑪ | − classifier selection | 84.3 ±0.57 | 81.0 ±1.75 | 87.5 ±0.64 | 84.3 |

Fig. 10

Table 7

| Users' free languages | *"Did you mean this?"* |
|---|---|
| WordNet Definitions | Class names |
| *"a drinking glass with a base and stem"* | *"goblet"* |
| *"live associated with sea anemones"* | *"anemones fish"* |
| *"a tall elegant chest of drawers"* | *"chiffonier"* |

EP 4 459 506 A1

Fig. 11

EP 4 459 506 A1

1100

Fig. 12(a)

Fig. 12(b)

## Fig. 13(a)

<u>1300</u>

1314

1316

1312

1318

1320a

1302

1320b

1310

Training Input Database(s)

1304

Classification Results

1306

Trained Personalized Model(s)

1308

Fig. 13(b)

1312,
1314,
1316,
1318

**Client Device(s)**

Processor(s)

Memory

Instructions

Data

Display

User Inputs

**Server Computing Device**

Processor(s)

Memory

Instructions

Data

1302

1304,
1306,
1308

Network

1310

Database(s)

**In-Home Device(s)**

Processor(s)

Memory

Instructions

Data

Display

1320

User Inputs

EP 4 459 506 A1

Fig. 14    <u>1400</u>

1402 — Receiving, by one or more processors of a computing device, input corresponding to a task description

1404 — Rncoding, by the one or more processors, the input corresponding to the task description into a set of text embeddings

1406 — Applying, by the one or more processors, mixer prediction to the set of text embeddings to generate a set of mixers

1408 — Learning, by the one or more processors, a set of basis models according to the set of mixers

1410 — Combining, by the one or more processors, the set of basis models to form a single personalized model corresponding to the task description

EP 4 459 506 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HU RONGHANG ET AL: "Explainable Neural Computation via Stack Neural Module Networks", 6 October 2018 (2018-10-06), 20181006, PAGE(S) 55 - 71, XP047635441, [retrieved on 2018-10-06] * abstract; Sections 1-5; figure 2; table 1 * | 1-15 | INV. G06N3/045 G06N3/0985 |
| A | TIANYUAN ZHANG ET AL: "Domain-Aware Dynamic Networks", ARXIV.ORG, CORNELL UNIVERSITY LIBRARY, 201 OLIN LIBRARY CORNELL UNIVERSITY ITHACA, NY 14853, 26 November 2019 (2019-11-26), XP081542078, * abstract; Sections 1-5; figure 1 * | 1-15 | |
| A | JIN YEONG-HWA ET AL: "QueryNet: Querying neural networks for lightweight specialized models", INFORMATION SCIENCES, ELSEVIER, AMSTERDAM, NL, vol. 589, 30 December 2021 (2021-12-30), pages 186-198, XP086951637, ISSN: 0020-0255, DOI: 10.1016/J.INS.2021.12.097 [retrieved on 2021-12-30] * abstract; Sections 1-5; figure 1 * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 18 September 2024 | Klasen, TJ |

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Tu Cheng-Hao ET AL: "EXTENDING CONDITIONAL CONVOLUTION STRUCTURES FOR ENHANCING MULTITASKING CONTINUAL LEARNING", , 2020, pages 1-6, XP093206277, Retrieved from the Internet: URL:https://ieeexplore.ieee.org/stampPDF/g etPDF.jsp?tp=&arnumber=9306252&ref=aHR0cHM 6Ly9pZWVleHBsb3JlLmllZWUub3JnL2RvY3VtZW50L zkzMDYyNTI= [retrieved on 2024-09-18] * abstract; Sections I, III, and VI; figure 1 * | 1-15 | |

-----

**TECHNICAL FIELDS SEARCHED (IPC)**

The present search report has been drawn up for all claims

| Place of search | Date of completion of the search | Examiner |
|---|---|---|
| The Hague | 18 September 2024 | Klasen, TJ |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10452978 B

**Non-patent literature cited in the description**

- **DENG et al.** *A large-scale hierarchical image database,* 2009
- **VAN HORN et al.** *Benchmarking representation learning for natural world image collections,* 2021
- **PENG et al.** *Moment matching for multi-source domain adaptation,* 2019
- **RADFORD et al.** *Learning transferable visual models from natural language supervision,* 2021
- **HE et al.** *Deep residual learning for image recognition,* 2016